# EUROPEAN PATENT APPLICATION

(11) **EP 4 821 702 A1**
(43) Date of publication of application: **14.10.2026**
(21) Application number: 24900640.4
(22) Date of filing: 04.12.2024
(51) Int. Cl.: B60C 1/00, B60C 5/14, B60C 9/08, C08K 3/04, C08L 7/00

(54) **TIRE**

(30) Priority: 05.12.2023 JP 2023205135
(71) Applicant: The Yokohama Rubber Co., Ltd., Hiratsuka-shi, Kanagawa 254-8601 (JP)
(72) Inventor: OZAKI, Makoto, Hiratsuka-shi, Kanagawa 254-8601 (JP)
(74) Representative: Dilg, Haeusler, Schindelmann Patentanwaltsgesellschaft mbH
(86) International application number: PCT/JP2024/042848
(87) International publication number: WO 2025/121346

(57) **Abstract**

In a tire of an embodiment, a protrusion length L1 of a tie rubber layer extending along a carcass layer from a position A on a tire inner surface corresponding to a belt end toward a position B on the tire inner surface corresponding to a bead toe is a length that is 0.2 times or more of a periphery length L2 of the tire inner surface between the position A and the position B. Regarding carbon black contained in each of a tie rubber layer and a carcass coating rubber, CTAB adsorption specific surface areas are 40 to 125 m²/g and 25 to 40 m²/g, DBP absorption amounts are 100 to 130 mL/100 g and 60 to 95 mL/100 g, and products of the DBP absorption amounts and volume fractions of the carbon blacks are 18.0 to 28.0 mL/10000 g and 14.0 to 18.0 mL/10000 g.

## Description

### Technical Field

The present invention relates to a tire in which a tie rubber layer is disposed on an inner circumferential side of a carcass layer.

### Background Art

To reduce environmental impact, improving fuel economy performance of a vehicle has been required. Therefore, tires are required to have low heat build-up during rolling and low rolling resistance. To reduce heat build-up of a tire, it is effective to reduce a blended amount of carbon black in a rubber composition used in each portion of the tire. In recent years, in order to further improve fuel economy performance, it has been considered to suppress heat build-up of rubber of each portion of the tire excluding cap tread rubber in contact with a road surface.

On the other hand, when the blended amount of carbon black is reduced with the reduction in heat build-up of a tire, a problem arises in that the electrical resistance of the tire increases. When the electrical resistance of a tire is high and static electricity accumulated in a vehicle is not easily discharged to a road surface, there is a risk that malfunction occurs in operation and the like of an electrical component of the vehicle (for example, see Patent Document 1).

On the other hand, the tensile properties of a rubber composition may deteriorate with a change in the composition of the rubber composition, and the durability of the tire may deteriorate. Tires used for passenger vehicles are required to have excellent durability during high-speed travel as compared with tires used for commercial vehicles such as taxis and buses, and therefore, a composition of a rubber composition that deteriorates the tensile properties of the rubber composition is not preferable.

### Citation List

### Patent Literature

Patent Document 1: JP 2013-237337 A

### Summary of Invention

### Technical Problem

An object of the present invention is to provide a tire that can provide improved fuel economy performance of a vehicle and has low electrical resistance and excellent durability during high-speed travel.

### Solution to Problem

The present disclosure includes the following aspects.

### Aspect 1

A tire, including:
a pair of bead cores having an annular shape;
a carcass layer extending between the bead cores and folded back around the bead cores so as to form a toroidal shape, the carcass layer including a plurality of carcass cords and a carcass coating rubber covering the carcass cords;
a belt layer disposed on an outer circumferential side of the carcass layer; and
a tie rubber layer disposed on an inner circumferential side of the carcass layer, passing through a tire centerline, and extending along the carcass layer on both sides of the tire centerline, in which
a protrusion length L1 of the tie rubber layer extending along the carcass layer, from a position A on a tire inner surface intersecting a perpendicular line passing through a belt end on an outer side in a tire width direction of the belt layer and orthogonal to the tire inner surface toward a position B on the tire inner surface corresponding to a bead toe that is an end on an inner side in the tire width direction of a bead portion of the tire including the bead cores, is a length that is 0.2 times or more of a periphery length L2 of the tire inner surface between the position A and the position B,
the tie rubber layer is made of a rubber composition including 100 parts by mass of a rubber component containing 50 to 100 mass% of natural rubber and 30 to 75 parts by mass of carbon black having a CTAB adsorption specific surface area of 40 to 125 m²/g and a DBP absorption amount of 100 to 130 mL/100 g, and a product D1 × (V1/100) of a DBP absorption amount D1 of the carbon black and a volume fraction V1 [%] of the carbon black in the tie rubber layer is from 18.0 to 28.0 mL/10000 g, and
the carcass coating rubber is made of a rubber composition including 100 parts by mass of a rubber component containing 50 to 100 mass% of natural rubber and 30 to 65 parts by mass of carbon black having a CTAB adsorption specific surface area of 25 to 40 m²/g and a DBP absorption amount of 60 to 95 mL/100 g, and a product D2 × (V2/100) of a DBP absorption amount D2 of the carbon black and a volume fraction V2 [%] of the carbon black in the carcass coating rubber is from 14.0 to 18.0 mL/10000 g.

### Aspect 2

The tire according to aspect [1], in which a product TB1 × EB1 of a tensile strength TB1 [MPa] and an elongation at break EB1 [%] of the rubber composition of the tie rubber layer and a product TB2 × EB2 of a tensile strength TB2 [MPa] and an elongation at break EB2 [%] of the rubber composition of the carcass coating rubber satisfy a relationship TB1 × EB1 > TB2 × EB2.

### Aspect 3

The tire according to aspect [1] or [2], in which a tensile stress M100 [MPa] at 100% elongation of the rubber composition of the carcass coating rubber is greater than a tensile stress M100 [MPa] at 100% elongation of the rubber composition of the tie rubber layer.

### Aspect 4

The tire according to any one of Aspect [1] to Aspect [3], in which
each of the rubber composition of the tie rubber layer and the rubber composition of the carcass coating rubber further includes sulfur and a vulcanization accelerator, and
a blended amount of the sulfur and the vulcanization accelerator in the rubber composition of the carcass coating rubber per 100 parts by mass of the rubber component is greater than a blended amount of the sulfur and the vulcanization accelerator in the rubber composition of the tie rubber layer per 100 parts by mass of the rubber component.

### Aspect 5

A tire, including:
a pair of bead cores having an annular shape;
a carcass layer extending between the bead cores and folded back around the bead cores so as to form a toroidal shape, the carcass layer including a plurality of carcass cords and a carcass coating rubber covering the carcass cords;
a belt layer disposed on an outer circumferential side of the carcass layer; and
a tie rubber layer disposed on an inner circumferential side of the carcass layer, passing through a tire centerline, and extending along the carcass layer on both sides of the tire centerline, in which
a protrusion length L1 of the tie rubber layer extending along the carcass layer from a position A on a tire inner surface intersecting a perpendicular line passing through a belt end on an outer side in a tire width direction of the belt layer and orthogonal to the tire inner surface toward a position B on the tire inner surface corresponding to a bead toe that is an end on an inner side in the tire width direction of a bead portion of the tire including the bead cores is a length that is 0.2 times or more of a periphery length L2 of the tire inner surface between the position A and the position B,
the tie rubber layer includes carbon black (A) and carbon black (B) having mutually different CTAB adsorption specific surface areas, the tie rubber layer is made of a rubber composition including 100 parts by mass of a rubber component containing 50 to 100 mass% of natural rubber, 30 to 75 parts by mass of carbon black as the carbon black (A) having a CTAB adsorption specific surface area of 40 to 125 m²/g and a DBP absorption amount of 100 to 130 mL/100 g, and 5 to 40 parts by mass of carbon black as the carbon black (B) having a CTAB adsorption specific surface area of 25 to 50 m²/g and a DBP absorption amount of 50 to 130 mL/100 g, and a sum of a product D1a × (V1a/100) of a DBP absorption amount D1a of the carbon black (A) and a volume fraction V1a [%] of the carbon black (A) in the tie rubber layer and a product D1b × (V1b/100) of a DBP absorption amount D1b of the carbon black (B) and a volume fraction V1b [%] of the carbon black (B) in the tie rubber layer is from 18.0 to 28.0 mL/10000 g, and
the carcass coating rubber is made of a rubber composition including 100 parts by mass of a rubber component containing 50 to 100 mass% of natural rubber and 30 to 65 parts by mass of carbon black having a CTAB adsorption specific surface area of 25 to 40 m²/g and a DBP absorption amount of 60 to 95 mL/100 g, and a product D2 × (V2/100) of a DBP absorption amount D2 of the carbon black and a volume fraction V2 [%] of the carbon black in the carcass coating rubber is from 14.0 to 18.0 mL/10000 g.

### Advantageous Effects of Invention

According to the tire of the above aspect, fuel economy performance of a vehicle can be improved, electrical resistance of the tire is low, and durability during high-speed travel is excellent.

### Brief Description of Drawings

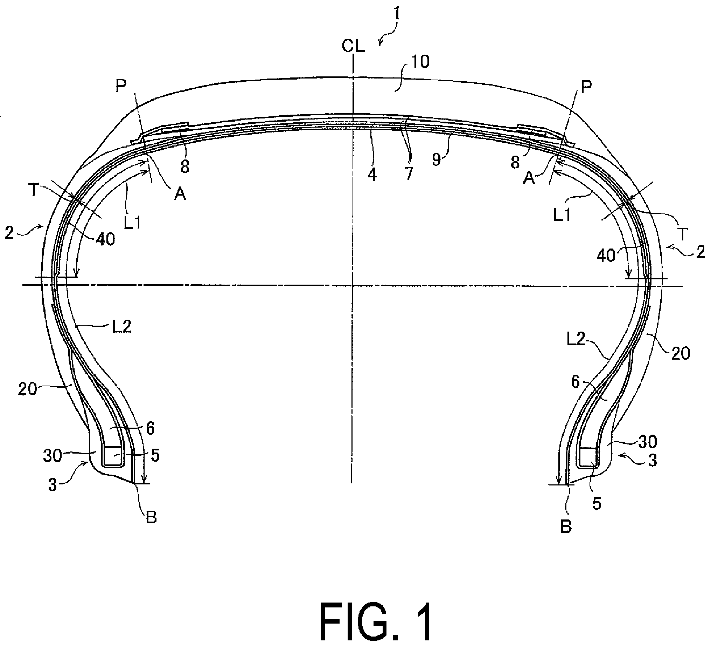

FIG. 1 is diagram illustrating a tire meridian cross-section according to an embodiment.

### Description of Embodiments

Hereinafter, a tire of an embodiment will be described in detail.

A tire of an embodiment of the present invention is preferably a tire for internal pressure inflation such as a pneumatic tire, and the tire of the present embodiment is a pneumatic tire. A cavity region surrounded by a tire for internal pressure inflation and a rim to which the tire for internal pressure inflation is mounted can be filled with air, an inert gas such as nitrogen, or other gases.

FIG. 1 is a diagram illustrating a tire meridian cross-section of the present embodiment (a cross-section of a tire taken along a plane including a tire rotation axis). As illustrated in FIG. 1, the tire of the present embodiment includes a tread portion 1 extending in a tire circumferential direction and having an annular shape, a pair of sidewall portions 2 disposed on both sides of the tread portion 1, and a pair of bead portions 3 disposed on inner sides in a tire radial direction of the sidewall portions 2. The reference sign CL in FIG. 1 denotes a tire centerline.

The bead portion 3 has, for example, an annular bead core 5 having a structure in which a steel wire coated with rubber is wound a plurality of times in the tire circumferential direction.

A carcass layer 4 is a layer extending between the pair of bead cores 5 and folded back around each of the bead cores 5 from an inner side to an outer side in a tire width direction so as to form a toroidal shape. The carcass layer 4 includes a plurality of arranged carcass cords extending in the tire radial direction, and a carcass coating rubber covering the carcass cords. The carcass cords are reinforcing cords made of organic fibers such as PET fibers. The carcass coating rubber is vulcanized rubber in which the plurality of arranged carcass cords are sandwiched from both sides by sheets of carcass coating rubber.

A bead filler 6 is disposed on an outer circumferential side of the bead core 5, and the bead filler 6 is enclosed by a portion of the carcass layer 4 folded back around the bead core 5.

A plurality of belt layers 7 (two layers in the illustrated example) are embedded on the outer circumferential side (an outer side in the tire radial direction) of the carcass layer 4 in the tread portion 1. Each of the belt layers 7 includes a plurality of reinforcing cords (for example, steel cords) inclined with respect to the tire circumferential direction, and is disposed such that inclination directions of the reinforcing cords intersect with each other between the layers. In these belt layers 7, the inclination angle of the reinforcing cords with respect to the tire circumferential direction is set within a range of, for example, 10° to 40°.

Belt reinforcing layers 8 (in the illustrated example, a pair of belt reinforcing layers 8 covering end portions in the tire width direction of the belt layers 7) are provided on the outer circumferential side of the belt layers 7. The belt reinforcing layer 8 includes organic fiber cords oriented in the tire circumferential direction. In the belt reinforcing layer 8, an inclination angle of the organic fiber cords with respect to the tire circumferential direction is set to, for example, 0° to 5°.

An innerliner layer 9 is provided on an inner surface of the tire forming a cavity region between the inner surface and a rim. The innerliner layer 9 is made of a rubber composition including butyl rubber as a main component.

A tread rubber layer 10 is disposed on the outer circumferential side of the carcass layer 4 in the tread portion 1. The tread rubber layer 10 may have a multilayer structure including two types of rubber layers (cap tread rubber layer, undertread rubber layer) with differing physical properties layered in the tire radial direction.

In the sidewall portion 2, a side rubber layer 20 is disposed on the outer side in the tire width direction of the carcass layer 4.

In the bead portion 3, a rim cushion rubber layer 30 is disposed around the carcass layer 4.

A tie rubber layer 40 is disposed between the innerliner layer 9 and the carcass layer 4. The tie rubber layer 40 is a rubber layer that passes through the tire centerline CL and extends along the carcass layer 4 on both sides in the tire width direction of the tire centerline CL. The tie rubber layer 40 extends in the tire circumferential direction and has an annular shape. Such a tie rubber layer 40 is provided in a wide region in the tire width direction including a central portion in the tire width direction, so that adhesive properties between the innerliner layer 9 and the carcass layer 4 can be made satisfactory. The tie rubber layer 40 extends maintaining a constant thickness, and the thickness thereof is preferably from 0.05 to 0.6 mm.

Regarding the tie rubber layer 40, a protrusion length L1 of the tie rubber layer 40 extending along the carcass layer 4 from a position A on the tire inner surface corresponding to an end (belt end) on the outer side in the tire width direction of the belt layer 7 toward a position B on the tire inner surface corresponding to a bead toe that is an end on the inner side in the tire width direction of the bead portion 3 is a length that is 0.2 times or more of a periphery length L2 of the tire inner surface between the position A and the position B. When positions of ends on the outer side in the tire width direction are different among the plurality of belt layers 7 as in the illustrated example, the belt end refers to the end of the belt layer 7 positioned on the outermost side in the tire width direction. The position A on the tire inner surface corresponding to the position of the belt end refers to a position on the tire inner surface intersecting a perpendicular line P passing through the belt end and orthogonal to the tire inner surface in the tire meridian cross-section. The periphery length refers to a length of the tire inner surface measured in the tire meridian cross-section. The tire inner surface is the surface of the innerliner layer 9 facing the cavity region in the illustrated example. The protrusion length L1 of the tie rubber layer 40 is preferably 0.5 times or more, and particularly preferably 1 time, of the periphery length L2 of the tire inner surface from the perspective of easily ensuring a path of electricity flowing from a rim side toward a road surface side in the tire.

The tie rubber layer 40 is made of a rubber composition including 100 parts by mass of a rubber component containing 50 to 100 mass% of natural rubber (NR), and 30 to 75 parts by mass of carbon black having a CTAB (n-hexadecyltrimethylammonium bromide) adsorption specific surface area of 40 to 125 m²/g and a DBP (dibutyl phthalate) absorption amount of 100 to 130 mL/100 g.

The blended amount of the natural rubber (NR) in the tie rubber layer 40 of 50 to 100 mass% contributes to improving tensile strength and elongation at break of the tie rubber layer 40 and high-speed durability of the tire. The blended amount of the natural rubber (NR) is preferably from 60 to 95 parts by mass per 100 parts by mass of the rubber component of the tie rubber layer 40. The rubber component of the tie rubber layer 40 preferably further includes a diene rubber such as a styrene-butadiene rubber (SBR) in addition to the natural rubber (NR). As a result, hardness of the tie rubber layer 40 can be ensured and processability can be made satisfactory.

The CTAB adsorption specific surface area of the carbon black is preferably from 40 to 125 m²/g, and the larger the CTAB adsorption specific surface area, the smaller the particle size. The DBP absorption amount is preferably from 100 to 130 mL/100 g, and the larger the DBP absorption amount, the larger the chain structure (structure) of the particles. The DBP absorption amount of the carbon black of the tie rubber layer 40 is greater than the DBP absorption amount of the carbon black of the carcass coating rubber, lengthens connections between carbon black particles, and contributes to obtaining a large structure. When the tie rubber layer 40 contains such carbon black in a large amount, in other words, 30 to 75 parts by mass of carbon black per 100 parts by mass of the rubber component, the electrical conductivity of the tie rubber layer 40 is likely to be satisfactory, and the electrical resistance of the tire is likely to be reduced. On the other hand, since the tie rubber layer 40 is a thin layer, even when the carbon black is included in the above-described blended amount, heat build-up of the tie rubber layer 40 during rolling of the tire is readily suppressed, and tire rolling resistance is unlikely to deteriorate. In addition, the carbon black having a CTAB adsorption specific surface area of 40 to 125 m²/g is included in the above-described blended amount, and thus the tensile strength and the elongation at break of the tie rubber layer 40 are improved, and the high-speed durability of the tire is readily improved. The blended amount of the carbon black of the tie rubber layer 40 preferably ranges from 50 to 70 parts by mass per 100 parts by mass of the rubber component.

In the present description, the CTAB adsorption specific surface area of the carbon black is a value measured in accordance with JIS K 6217-3. The CTAB adsorption specific surface area of the carbon black in the tie rubber layer 40 is preferably from 70 to 125 m²/g. Furthermore, 110 to 125 m²/g is preferable.

In the present description, the DBP absorption amount of the carbon black is a value measured in accordance with JIS K 6217-4. The DBP absorption amount of the carbon black in the tie rubber layer 40 is preferably from 110 to 130 mL/100 g, and more preferably 115 to 130 mL/100 g.

As the carbon black of the tie rubber layer 40, carbon black of a grade such as FEF, HAF, or ISAF is preferably used.

Regarding the tie rubber layer 40, a product D1 × (V1/100) of a DBP absorption amount D1 of the carbon black and a volume fraction V1 [%] of the carbon black in the tie rubber layer 40 is from 18.0 to 28.0 mL/10000 g. When a value of a product of a DBP absorption amount and a volume fraction of carbon black in rubber is large, the electrical conductivity of the rubber is satisfactory, and the electrical resistance of the tire is likely to be reduced. The value of the product D1 × (V1/100) of the tie rubber layer 40 is relatively large, and the electrical conductivity of the tie rubber layer 40 is satisfactory as compared with that of the carcass coating rubber, which contributes to reducing the electrical resistance of the tire. In the present description, the volume fraction of carbon black is calculated as a ratio of the volume of carbon black obtained by dividing the mass of carbon black per unit part by mass of the rubber composition by the specific gravity thereof to the volume of the rubber composition obtained by dividing the mass of the rubber composition per unit part by mass of the rubber composition by the specific gravity thereof.

The carcass coating rubber is made of a rubber composition including, per 100 parts by mass of the rubber component of the carcass coating rubber, 50 to 100 parts by mass of natural rubber and 30 to 65 parts by mass of carbon black having a CTAB adsorption specific surface area of 25 to 40 m²/g and a DBP absorption amount of 60 to 95 mL/100 g.

The blended amount of the natural rubber (NR) in the carcass coating rubber of 50 to 100 parts by mass contributes to obtaining the appropriate strength of the carcass layer 4. The blended amount of the natural rubber (NR) is preferably from 55 to 80 parts by mass per 100 parts by mass of the rubber component of the carcass coating rubber. The rubber component of the tie rubber layer 40 preferably further includes a diene rubber such as a styrene-butadiene rubber (SBR) in addition to the natural rubber (NR). As a result, processability can be made satisfactory while ensuring appropriate hardness of the carcass coating rubber.

Carbon black having a CTAB adsorption specific surface area of 25 to 40 m²/g is preferable, and the greater the CTAB adsorption specific surface area, the smaller the particle size. The DBP absorption amount is preferably within the range of 60 to 95 mL/100 g, and by setting the DBP absorption amount within this range, processability and productivity can be made satisfactory. The CTAB adsorption specific surface area of the carbon black is preferably smaller than the CTAB adsorption specific surface area of the carbon black of the tie rubber layer 40, and is more preferably from 25 to 35 m²/g.

The DBP absorption amount of the carbon black in the carcass coating rubber is smaller than the DBP absorption amount of the carbon black in the tie rubber layer 40, and contributes to suppressing heat build-up of the carcass coating rubber and reducing tire rolling resistance. In addition, the tensile strength and the elongation at break of the carcass coating rubber become relatively small with respect to the tie rubber layer 40, and the rolling resistance and the high-speed durability of the tire can be provided in a compatible manner. The DBP absorption amount of the carbon black is preferably from 65 to 90 mL/100 g.

The carbon black of the carcass coating rubber is preferably of a GPF grade.

The blended amount of such carbon black in the carcass coating rubber is suppressed to 65 parts by mass or less per 100 parts by mass of the rubber component, so that heat build-up of the carcass coating rubber during rolling of the tire is readily suppressed, and the tire rolling resistance is likely to be reduced. In addition, the tensile strength and the elongation at break of the carcass coating rubber are likely to be appropriate, and contribute to improving the high-speed durability of the tire. On the other hand, the blended amount of carbon black in the carcass coating rubber is 30 parts by mass or more per 100 parts by mass of the rubber component, so that the necessary electrical conductivity can be ensured even when the protrusion length L1 of the tie rubber layer 40 is short. The blended amount of the carbon black in the carcass coating rubber preferably ranges from 40 to 60 parts by mass per 100 parts by mass of the rubber component. The rubber composition of the carcass coating rubber preferably does not contain carbon black other than the above-described carbon black.

Regarding the carcass coating rubber, a product D2 × (V2/100) of a DBP absorption amount D2 of the carbon black and a volume fraction V2 [%] of the carbon black in the carcass coating rubber is from 14.0 to 18.0 mL/10000 g. The value of the product D2 × (V2/100) of the carcass coating rubber is relatively small, and contributes to suppressing heat build-up of the carcass coating rubber and reducing tire rolling resistance.

A thickness of each of sheets of the carcass coating rubber sandwiching the arranged carcass cords from both sides is preferably from 0.1 to 0.8 mm.

The rubber compositions of the tie rubber layer 40 and the carcass coating rubber preferably contain an alkylphenol resin and an amine-based anti-aging agent in addition to natural rubber (NR) and carbon black.

A blended amount of the alkylphenol resin is preferably from 0.1 to 5 parts by mass per 100 parts by mass of the rubber component of the tie rubber layer 40 or the carcass coating rubber. The tie rubber layer 40 contains the alkylphenol resin in this blended amount, so that adhesiveness becomes satisfactory, and moldability of the tire is likely to be satisfactory. As the alkylphenol resin, a paraoctylphenol resin or the like is preferably used.

A blended amount of the amine-based anti-aging agent is preferably from 0.1 to 5 parts by mass per 100 parts by mass of the rubber component of the tie rubber layer 40 or the carcass coating rubber. When the amine-based anti-aging agent is contained in such a blended amount, the high-speed durability of the tire is likely to be improved. In the tie rubber layer 40, an aromatic secondary amine-based anti-aging agent such as N-phenyl-N'-1,3-dimethylbutyl-p-phenylenediamine (6PPD) is preferably used as the amine-based anti-aging agent. In the carcass coating rubber, 2,2,4-trimethyl-1,2-dihydroquinoline (TMQ) or the like is preferably used as the amine-based anti-aging agent.

The rubber compositions of the tie rubber layer 40 and the carcass coating rubber preferably further contain compounding agents such as oil, stearic acid, zinc oxide, sulfur, and a vulcanization accelerator.

A blended amount of sulfur and vulcanization accelerator in the rubber composition of the carcass coating rubber per 100 parts by mass of the rubber component is preferably greater than a blended amount of sulfur and vulcanization accelerator in the rubber composition of the tie rubber layer 40 per 100 parts by mass of the rubber component. As a result, the rolling resistance is likely to be reduced and the high-speed durability is likely to be improved.

The rubber compositions constituting the rim cushion rubber layer 30, the bead filler 6, the side rubber layer 20, the innerliner layer 9, and the tread rubber layer 10 are not particularly limited as long as they are generally used as rubber compositions for respective members of tires.

According to the tire described above, fuel economy performance of a vehicle can be improved, electrical resistance of the tire is low, and durability during high-speed travel is excellent. Such a tire is particularly suitable as a tire for a passenger vehicle.

A product TB1 × EB1 of a tensile strength TB1 [MPa] and an elongation at break EB1 [%] of the rubber composition of the tie rubber layer 40 and a product TB2 × EB2 of a tensile strength TB2 [MPa] and an elongation at break EB2 [%] of the rubber composition of the carcass coating rubber preferably satisfy the relationship TB1 × EB1 > TB2 × EB2. The tie rubber layer 40 and the carcass coating rubber satisfy the above relationship, so that the high-speed durability of the tire is likely to be improved. The tensile strength TB is a value [MPa] measured in accordance with JIS K 6251 and under a condition of a temperature of 23°C. The elongation at break EB is a value [%] measured in accordance with JIS K 6251 and under a condition of a temperature of 23°C. The value of TB1 × EB1 is preferably from 7500 to 9500 [MPa•%]. The value of TB2 × EB2 is preferably 7000 to 8000 [MPa•%].

A tensile stress M100 [MPa] at 100% elongation of the rubber composition of the carcass coating rubber is preferably greater than a tensile stress M100 [MPa] at 100% elongation of the rubber composition of the tie rubber layer 40. The tie rubber layer 40 and the carcass coating rubber satisfy the above relationship, so that the high-speed durability of the tire is likely to be improved. The tensile stress M100 is a value measured using a No. 3 dumbbell test piece in accordance with JIS K 6251 under conditions of a tensile speed of 500 mm/minute and a temperature of 23°C. The value of the tensile stress M100 of the rubber composition of the carcass coating rubber is preferably from 3.0 to 4.5 [MPa]. The value of the tensile stress M100 of the rubber composition of the tie rubber layer is preferably from 3.0 to 4.2 [MPa].

According to an embodiment (hereinafter also referred to as a second embodiment) different from the above-described embodiment (hereinafter also referred to as a first embodiment), the rubber composition of the tie rubber layer 40 contains carbon black (A) and carbon black (B) having mutually different CTAB adsorption specific surface areas.

In the second embodiment, the rubber composition of the tie rubber layer 40 includes 100 parts by mass of a rubber component containing 50 to 100 mass% of natural rubber, 30 to 75 parts by mass of carbon black as the carbon black (A) having a CTAB adsorption specific surface area of 40 to 125 m²/g and a DBP absorption amount of 100 to 130 mL/100 g, and 5 to 40 parts by mass of carbon black as the carbon black (B) having a CTAB adsorption specific surface area of 25 to 50 m²/g and a DBP absorption amount of 50 to 130 mL/100 g.

A sum of a product D1a × (V1a/100) of a DBP absorption amount D1a of the carbon black (A) and a volume fraction V1a [%] of the carbon black (A) in the tie rubber layer 40 and a product D1b × (V1b/100) of a DBP absorption amount D1b of the carbon black (B) and a volume fraction V1b [%] of the carbon black (B) in the tie rubber layer 40 is from 18.0 to 28.0 mL/10000 g.

Except for the above configuration, the tire of the second embodiment is configured in the same manner as the tire of the first embodiment. The carbon black (A) is configured in the same manner as the carbon black included in the tie rubber layer 40 of the tire of the first embodiment.

The sum of the product D1a × (V1a/100) and the product D1b × (V1b/100) of 18.0 to 28.0 mL/10000 g contributes to reducing the electrical resistance of the tie rubber layer 40 and reducing the electrical resistance of the tire, as in the first embodiment. The volume fractions V1a and V1b of the carbon blacks (A) and (B) are respectively calculated in the same manner as the volume fraction of the carbon black described in the first embodiment. The sum of the product D1a × (V1a/100) and the product D1b × (V1b/100) is calculated according to the following formula, for example. $\begin{matrix}D 1 a \times \left(V1a/100\right) + D 1 b \times \left(V1b/100\right) \\ = \left\{\begin{matrix}D 1 a \times \left(\begin{matrix}blended amount of carbon black \left(A\right) in tie rubber layer 40 \\ \left[parts by mass\right]\end{matrix}\right) \left./specific gravity of carbon black\left(A\right)\right) \\ + D 1 b \times \left(blended amount of carbon black\right) \left.\begin{matrix}in tie rubber layer 40 \\ \left[parts by mass\right]\end{matrix}\right) / \left.specific gravity of carbon black\left(B\right)\right)\end{matrix}\right\} / \left(\begin{matrix}total blended amount of \\ components contained in tie rubber layer 40 \left[parts by mass\right] / specific gravity of \\ tie rubber layer 40\end{matrix}\right)\end{matrix}$

According to the tire of the second embodiment, similarly to the tire of the first embodiment, fuel economy performance of a vehicle can be improved, electrical resistance of the tire is low, and durability during high-speed travel is excellent. Such a tire is particularly suitable as a tire for a passenger vehicle. In particular, according to the tire of the second embodiment, since the tie rubber layer 40 contains the carbon black (A) having a small particle size in addition to the carbon black (B) having a large particle size, the hardness of the tie rubber layer 40 is well balanced with the tensile strength and the elongation at break, the high-speed durability is improved, the rolling resistance is reduced, and the electrical resistance of the tire is reduced. In addition, since the tie rubber layer 40 contains the carbon black (A) and the carbon black (B) in the above-described blended amounts, the steering stability and the high-speed durability of the tire are well balanced.

The CTAB adsorption specific surface area of the carbon black (B) is preferably from 27 to 40 m²/g and more preferably from 27 to 38 m²/g. The DBP absorption amount of the carbon black (B) is preferably from 70 to 130 mL/100 g. The blended amount of the carbon black (B) in the tie rubber layer 40 is preferably from 10 to 35 parts by mass, and more preferably from 15 to 30 parts by mass per 100 parts by mass of the rubber component of the tie rubber layer 40.

The carbon black (A) and the carbon black (B) preferably have mutually different DBP absorption amounts, in addition to having mutually different CTAB adsorption specific surface areas.

### Examples, Comparative Examples, and Reference Examples

In order to confirm the effects of the tire of the present embodiment, tires having a tire size of 235/45R18 and the basic structure illustrated in FIG. 1 were manufactured by variously changing the specifications of the tie rubber layer and the carcass coating rubber (Reference Examples, Comparative Examples, and Examples), and the electrical resistance, the rolling resistances, and the high-speed durability were evaluated.

The specifications of the tie rubber layer and the carcass coating rubber are as follows.

The carbon blacks CB 1 to 5 shown in Tables 4 to 6 are as follows.

**[Table 1]**

| | | Grade | CTAB adsorption specific surface area (m²/g) | DBP absorption amount (mL/100 g) |
|---|---|---|---|---|
| CB 1 | SEAST 7HM available from Tokai Carbon | ISAF | 122 | 125 |
| CB 2 | SEAST 3 available from Tokai Carbon | HAF | 82 | 102 |
| CB 3 | SEAST 300 available from Tokai Carbon | HAF-LS | 88 | 78 |
| CB 4 | SEAST F available from Tokai Carbon | FEF | 48 | 125 |
| CB 5 | SEAST V available from Tokai Carbon | GPF | 30 | 87 |

Regarding the rubber composition of the tie rubber layer, the blending of raw materials that are commonly included in the Reference Examples, Comparative Examples, and Examples is as shown in Table 2 below. The numerical values in the table represent parts by mass per 100 parts by mass of the rubber component.

**[Table 2]**

| | |
|---|---|
| Aroma oil | 4 |
| Alkylphenol resin | 1.5 |
| Zinc oxide | 4 |
| Anti-aging agent 1 | 1.2 |
| Stearic acid | 1.5 |
| Insoluble sulfur | 3.0 |
| Vulcanization accelerator | 1.5 |

The blending of the raw materials of the rubber compositions of the carcass coating rubbers A to F shown in Tables 4 to 6 are as shown in Table 3 below. The numerical values in the table represent parts by mass per 100 parts by mass of the rubber component.

**[Table 3]**

| Carcass coating rubber | A | B | c | D | E | F |
|---|---|---|---|---|---|---|
| NR | 60 | 60 | 60 | 20 | 60 | 60 |
| SBR | 40 | 40 | 40 | 80 | 40 | 40 |
| CB 1 | | | | | | |
| CB 2 | 50 | | | | | |
| CB 3 | | | | | | |
| CB 4 | | | | | | |
| CB 5 | | 50 | 50 | 50 | 20 | 80 |
| Aroma oil | 5 | 5 | 5 | 5 | 5 | 5 |
| Alkylphenol resin | 1.5 | 1.5 | 1.5 | 1.5 | 1.5 | 1.5 |
| Zinc oxide | 4 | 4 | 4 | 4 | 4 | 4 |
| Anti-aging agent 2 | 0.5 | 0.5 | 0.5 | 0.5 | 0.5 | 0.5 |
| Stearic acid | 1.5 | 1.5 | 1.5 | 1.5 | 1.5 | 1.5 |
| Insoluble sulfur | 3.0 | 4.0 | 3.0 | 3.0 | 3.0 | 3.0 |
| Vulcanization accelerator | 1.2 | 1.5 | 1.2 | 1.2 | 1.2 | 1.2 |

The other raw materials shown in the table are as follows.
- NR: TSR20
- SBR: SBR1502 available from Zeon Corporation
- Aroma oil: Diana Process NH-70S available from Idemitsu Kosan, Co., Ltd.
- Stearic acid: Stearic Acid 50S available from Nisshin Rika Co., Ltd.
- Zinc oxide: Zinc Oxide III available from Seido Chemical Industry Co., Ltd.
- Anti-aging agent 1: NOCRAC 6C available from Ouchi Shinko Chemical Industrial Co., Ltd.
- Anti-aging agent 2: Pilnox TMQ available from Nocil Limited
- Alkylphenol resin: Hitanol 1502Z available from Hitachi Chemical Co., Ltd.
- Insoluble sulfur: MUCRON OT-20 available from Shikoku Chemicals Corporation)
- Vulcanization accelerator: SANCELER NS-G available from Sanshin Chemical Industry Co., Ltd.

Note that, in the tie rubber layer, the thickness of the portion where the thickness was maintained constant was set to 0.5 mm.

The reinforcing cords of the carcass layer were PET fiber cords, and the thickness of the carcass layer was set to 1.0 mm. For the rubber composition of each portion of the tire excluding the carcass coating rubber and the tie rubber layer, for example, a composition generally adopted for low fuel consumption tires was adopted.

In the table, L1/L2 refers to the ratio of the protrusion length L1 to the periphery length L2 between the positions A and B.

The electrical resistance, the rolling resistance, and the high-speed durability were evaluated in the following manner.

### Electrical Resistance

In an environment of an ambient temperature of 23°C and a humidity of 50%, the test tire was assembled to a wheel having a rim size of 18 × 7J, and under conditions of an air pressure of 200 kPa and a load of 5.26 kN, a voltage of 1000 V was applied to the wheel, and after 5 minutes, the electrical resistance value [Ω] between the tread contact surface and the rim was measured. The measurement was performed at three points on the circumference of the tire, an average value thereof was determined, and of this average value, the 10^n part (n is a natural number) (indicated as "10^n" in the table) is shown in the table. A smaller value indicates lower electrical resistance, excellent electrical discharge properties, and excellent electrostatic suppression performance of the tire.

### Rolling Resistance

The test tire was assembled to a wheel having a rim size of 18 × 7J, the rolling resistance was measured under the conditions of an air pressure of 210 kPa, a load of 4.82 kN, and a speed of 80 km/h in accordance with ISO28580 using an indoor drum testing machine (a drum diameter: 1707.6 mm), and the measurement value was expressed as an index value with the Reference Example set to 100. A smaller index value indicates lower rolling resistance, and superior fuel economy performance of a vehicle.

### High-Speed Durability

The test tire was assembled to a wheel having a rim size of 18 × 7J, sealed with oxygen to an internal pressure of 350 kPa, and stored for 7 days under a condition of a temperature of 70°C. The test tire subjected to such pretreatment was mounted to an indoor drum testing machine (a drum diameter: 1707.6 mm) with the tire inflated to an air pressure of 230 kPa, a load of 88% of the maximum load capacity specified by JATMA was applied, traveling was started under a condition of a speed of 120 km/h, the speed was increased by 8 km/h every 30 minutes, and a running test was conducted until a failure occurred in the tire. The travel distance was expressed as an index value with the travel distance of Reference Example set to 100. Larger index values indicate superior high-speed durability.

**[Table 4]**

| | | Reference Example | Comparative Example 1 | Comparative Example 2 | Comparative Example 3 | Comparative Example 4 | Comparative Example 5 | Comparative Example 6 |
|---|---|---|---|---|---|---|---|---|
| | NR | 80 | 80 | 80 | 80 | 80 | 80 | 35 |
| | SBR | 20 | 20 | 20 | 20 | 20 | 20 | 65 |
| | CB 1 | | | | | | | |
| | CB 2 | | | | 20 | 75 | 55 | 55 |
| | CB 3 | | 55 | | | | | |
| Tie rubber | CB 4 | | | 85 | | | | |
| | CB 5 | 55 | | | | | | |
| | L1/L2 | 0.18 | 0.18 | 0.18 | 0.18 | 0.18 | 0.18 | 0.18 |
| | D1 × V1/100 [mL/ 10000 g] | 17.6 | 15.1 | 28.4 | 8.5 | 25.9 | 20.4 | 19.1 |
| | M100 [MPa] | 3.8 | 2.6 | 8.2 | 1.2 | 6.0 | 3.6 | 4.4 |
| | TB1 [MPa] | 18.8 | 20.5 | 20.4 | 17.5 | 21.0 | 20.9 | 19.6 |
| | EB1 [%] | 392 | 426 | 236 | 537 | 287 | 364 | 316 |
| | TB1 × EB1 | 7370 | 8733 | 4814 | 9398 | 6027 | 7608 | 6194 |
| Carcass | Carcass coating rubber | A | A | A | A | A | A | A |
| | D2 × V2/100 [mL/ 10000 g] | 18.9 | 18.9 | 18.9 | 18.9 | 18.9 | 18.9 | 18.9 |
| | M100 [MPa] | 3.9 | 3.9 | 3.9 | 3.9 | 3.9 | 3.9 | 3.9 |
| | TB2 [MPa] | 20.8 | 20.8 | 20.8 | 20.8 | 20.8 | 20.8 | 20.8 |
| | EB2 [%] | 336 | 336 | 336 | 336 | 336 | 336 | 336 |
| | TB2 × EB2 | 6989 | 6989 | 6989 | 6989 | 6989 | 6989 | 6989 |
| Evaluation | Rolling resistance | 100 | 103 | 108 | 92 | 109 | 102 | 103 |
| | High-speed durability | 100 | 103 | 94 | 85 | 95 | 99 | 97 |
| | Electrical resistance | 10^8 | 10^9 | 10^5 | 10^11 | 10^5 | 10^7 | 10^7 |

**[Table 5]**

| | | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|
| | NR | 80 | 80 | 80 | 80 | 30 | 80 | 80 | 80 |
| | SBR | 20 | 20 | 20 | 20 | 70 | 20 | 20 | 20 |
| | CB 1 | | | | | | | | |
| | CB 2 | 55 | 55 | 20 | 90 | 55 | 55 | 55 | 55 |
| | CB 3 | | | | | | | | |
| | CB 4 | | | | | | | | |
| | CB 5 | | | | | | | | |
| Tie rubber | L1/L2 | 0.25 | 0.18 | 0.25 | 0.25 | 0.25 | 0.25 | 0.25 | 0.25 |
| | D1 × V1/100 [mL/ 10000 g] | 20.4 | 20.4 | 8.5 | 29.6 | 15.1 | 20.4 | 20.4 | 20.4 |
| | M100 [MPa] | 3.6 | 3.6 | 1.2 | 8.5 | 3.2 | 3.6 | 3.6 | 3.6 |
| | TB1 [MPa] | 20.9 | 20.9 | 17.5 | 18.2 | 19.5 | 20.9 | 20.9 | 20.9 |
| | EB1 [%] | 364 | 364 | 537 | 210 | 375 | 364 | 364 | 364 |
| | TB1 × EB1 | 7608 | 7608 | 9398 | 3822 | 7313 | 7608 | 7608 | 7608 |
| Carcass | Carcass coating rubber | A | B | B | B | B | D | E | F |
| | D2 × V2/100 [mL/ 10000 g] | 18.9 | 16.2 | 16.2 | 16.2 | 16.2 | 16.2 | 7.3 | 23.3 |
| | M100 [MPa] | 3.9 | 4.1 | 4.1 | 4.1 | 4.1 | 4.4 | 1.4 | 5.8 |
| | TB2 [MPa] | 20.8 | 18.4 | 18.4 | 18.4 | 18.4 | 17.6 | 17.4 | 19.8 |
| | EB2 [%] | 336 | 401 | 401 | 401 | 401 | 305 | 545 | 275 |
| | TB2 × EB2 | 6989 | 7378 | 7378 | 7378 | 7378 | 5368 | 9483 | 5445 |
| Evaluation | Rolling resistance | 103 | 96 | 91 | 107 | 103 | 103 | 94 | 107 |
| | High-speed durability | 102 | 105 | 92 | 97 | 95 | 96 | 96 | 100 |
| | Electrical resistance | 10^6 | 10^9 | 10^9 | 10^6 | 10^7 | 10^6 | 10^7 | 10^6 |

**[Table 6]**

| | | Example 1 | Example 2 | Example 3 | Example 4 | Example 5 | Example 6 | Example 7 | Example 8 |
|---|---|---|---|---|---|---|---|---|---|
| | NR | 80 | 80 | 80 | 80 | 80 | 80 | 80 | 80 |
| | SBR | 20 | 20 | 20 | 20 | 20 | 20 | 20 | 20 |
| | CB 1 | | | 60 | 45 | 60 | 60 | 45 | 30 |
| | CB 2 | 55 | | | | | | | |
| | CB 3 | | | | | | | | |
| | CB 4 | | 60 | | | | | | |
| | CB 5 | | | | | | | | 25 |
| Tie rubber | L1/L2 | 0.25 | 0.25 | 0.25 | 0.25 | 0.50 | 1.00 | 0.25 | 0.25 |
| | D1 × V1/100 [mL/ 10000 g] | 20.4 | 18.8 | 24.6 | 19.5 | 24.6 | 24.6 | 19.5 | 23.1 |
| | M100 [MPa] | 3.6 | 4.0 | 3.9 | 3.6 | 3.9 | 3.9 | 3.6 | 3.9 |
| | TB1 [MPa] | 20.9 | 19.9 | 21.5 | 21.9 | 21.5 | 21.5 | 21.9 | 21.0 |
| | EB1 [%] | 364 | 383 | 328 | 412 | 328 | 328 | 412 | 405 |
| | TB1 × EB1 | 7608 | 7622 | 7052 | 9023 | 7052 | 7052 | 9023 | 8505 |
| Carcass | Carcass coating rubber | B | B | B | B | B | B | C | B |
| | D2 × V2/100 [mL/ 10000 g] | 16.2 | 16.2 | 16.2 | 16.2 | 16.2 | 16.2 | 16.3 | 16.2 |
| | M100 [MPa] | 4.1 | 4.1 | 4.1 | 4.1 | 4.1 | 4.1 | 2.8 | 4.1 |
| | TB2 [MPa] | 18.4 | 18.4 | 18.4 | 18.4 | 18.4 | 18.4 | 19.1 | 18.4 |
| | EB2 [%] | 401 | 401 | 401 | 401 | 401 | 401 | 480 | 401 |
| | TB2 × EB2 | 7378 | 7378 | 7378 | 7378 | 7378 | 7378 | 9168 | 7378 |
| Evaluation | Rolling resistance | 95 | 94 | 97 | 92 | 97 | 97 | 97 | 90 |
| | High-speed durability | 109 | 110 | 111 | 118 | 123 | 124 | 108 | 117 |
| | Electrical resistance | 10^7 | 10^7 | 10^5 | 10^6 | 10^5 | 10^4 | 10^6 | 10^5 |

From the comparison between Example 1 and Comparative Examples 7 to 14, it can be seen that a tire having low rolling resistance, excellent durability during high-speed travel, and low electrical resistance is obtained by setting the protrusion length L1 of the tie rubber layer to be 0.2 times or more of the periphery length L2 between the positions A and B and by setting the rubber compositions of the tie rubber layer and the carcass coating rubber to contain natural rubber (NR) and carbon black having a CTAB adsorption specific surface area, a DBP absorption amount, and a product of the DBP absorption amount and a volume fraction within the above ranges in the above blended amounts.

From the comparison of Examples 1 to 3, it can be seen that the larger the particle size of the carbon black of the tie rubber layer, the lower the rolling resistance.

From the comparison of Examples 3, 5, and 6, it can be seen that the longer the protrusion length L1 of the tie rubber layer, the better the high-speed durability.

From the comparison of Examples 4 and 7, it can be seen that when the blended amount of sulfur and vulcanization accelerator in the carcass coating rubber is large, the relationship TB1 × EB1 > TB2 × EB2 and the relationship in which the tensile stress M100 of the carcass coating rubber is greater than the tensile stress M100 of the tie rubber layer are readily satisfied, and the high-speed durability is improved.

Although the tire according to an embodiment of the present invention has been described above in detail, the tire according to an embodiment of the present invention is not limited to the embodiments or examples that have been described above, and may of course be enhanced or modified in various ways without departing from the scope of the present invention.

### Reference Signs List

1 Tread portion
2 Sidewall portion
3 Bead portion
4 Carcass layer
5 Bead core
6 Bead filler
7 Belt layer
8 Belt reinforcing layer
9 Innerliner layer
10 Tread rubber layer
20 Side rubber layer
30 Rim cushion rubber layer
40 Tie rubber layer
CL Tire equator

## Claims

1. A tire, comprising:
a pair of bead cores having an annular shape;
a carcass layer extending between the bead cores and folded back around the bead cores so as to form a toroidal shape, the carcass layer comprising a plurality of carcass cords and a carcass coating rubber covering the carcass cords;
a belt layer disposed on an outer circumferential side of the carcass layer; and
a tie rubber layer disposed on an inner circumferential side of the carcass layer, passing through a tire centerline, and extending along the carcass layer on both sides of the tire centerline,
a protrusion length L1 of the tie rubber layer extending along the carcass layer, from a position A on a tire inner surface intersecting a perpendicular line passing through a belt end on an outer side in a tire width direction of the belt layer and orthogonal to the tire inner surface toward a position B on the tire inner surface corresponding to a bead toe that is an end on an inner side in the tire width direction of a bead portion of the tire comprising the bead cores, being a length that is 0.2 times or more of a periphery length L2 of the tire inner surface between the position A and the position B,
the tie rubber layer being made of a rubber composition comprising 100 parts by mass of a rubber component containing 50 to 100 mass% of natural rubber and 30 to 75 parts by mass of carbon black having a CTAB adsorption specific surface area of 40 to 125 m²/g and a DBP absorption amount of 100 to 130 mL/100 g, and a product D1 × (V1/100) of a DBP absorption amount D1 of the carbon black and a volume fraction V1 [%] of the carbon black in the tie rubber layer being from 18.0 to 28.0 mL/10000 g, and
the carcass coating rubber being made of a rubber composition comprising 100 parts by mass of a rubber component containing 50 to 100 mass% of natural rubber and 30 to 65 parts by mass of carbon black having a CTAB adsorption specific surface area of 25 to 40 m²/g and a DBP absorption amount of 60 to 95 mL/100 g, and a product D2 × (V2/100) of a DBP absorption amount D2 of the carbon black and a volume fraction V2 [%] of the carbon black in the carcass coating rubber being from 14.0 to 18.0 mL/10000 g.

2. The tire according to claim 1, wherein a product TB1 × EB1 of a tensile strength TB1 [MPa] and an elongation at break EB1 [%] of the rubber composition of the tie rubber layer and a product TB2 × EB2 of a tensile strength TB2 [MPa] and an elongation at break EB2 [%] of the rubber composition of the carcass coating rubber satisfy a relationship TB1 × EB1 > TB2 × EB2.

3. The tire according to claim 1 or 2, wherein a tensile stress M100 [MPa] at 100% elongation of the rubber composition of the carcass coating rubber is greater than a tensile stress M100 [MPa] at 100% elongation of the rubber composition of the tie rubber layer.

4. The tire according to claim 1 or 2, wherein
each of the rubber composition of the tie rubber layer and the rubber composition of the carcass coating rubber further comprises sulfur and a vulcanization accelerator, and
a blended amount of the sulfur and the vulcanization accelerator in the rubber composition of the carcass coating rubber per 100 parts by mass of the rubber component is greater than a blended amount of the sulfur and the vulcanization accelerator in the rubber composition of the tie rubber layer per 100 parts by mass of the rubber component.

5. A tire, comprising:
a pair of bead cores having an annular shape;
a carcass layer extending between the bead cores and folded back around the bead cores so as to form a toroidal shape, the carcass layer comprising a plurality of carcass cords and a carcass coating rubber covering the carcass cords;
a belt layer disposed on an outer circumferential side of the carcass layer; and
a tie rubber layer disposed on an inner circumferential side of the carcass layer, passing through a tire centerline, and extending along the carcass layer on both sides of the tire centerline,
a protrusion length L1 of the tie rubber layer extending along the carcass layer from a position A on a tire inner surface intersecting a perpendicular line passing through a belt end on an outer side in a tire width direction of the belt layer and orthogonal to the tire inner surface toward a position B on the tire inner surface corresponding to a bead toe that is an end on an inner side in the tire width direction of a bead portion of the tire comprising the bead cores being a length that is 0.2 times or more of a periphery length L2 of the tire inner surface between the position A and the position B,
the tie rubber layer being made of a rubber composition comprising carbon black (A) and carbon black (B) having mutually different CTAB adsorption specific surface areas, the rubber composition of the tie rubber layer comprising 100 parts by mass of a rubber component containing 50 to 100 mass% of natural rubber, 30 to 75 parts by mass of carbon black as the carbon black (A) having a CTAB adsorption specific surface area of 40 to 125 m²/g and a DBP absorption amount of 100 to 130 mL/100 g, and 5 to 40 parts by mass of carbon black as the carbon black (B) having a CTAB adsorption specific surface area of 25 to 50 m²/g and a DBP absorption amount of 50 to 130 mL/100 g, and a sum of a product D1a × (V1a/100) of a DBP absorption amount D1a of the carbon black (A) and a volume fraction V1a [%] of the carbon black (A) in the tie rubber layer and a product D1b × (V1b/100) of a DBP absorption amount D1b of the carbon black (B) and a volume fraction V1b [%] of the carbon black (B) in the tie rubber layer being from 18.0 to 28.0 mL/10000 g, and
the carcass coating rubber being made of a rubber composition comprising 100 parts by mass of a rubber component containing 50 to 100 mass% of natural rubber and 30 to 65 parts by mass of carbon black having a CTAB adsorption specific surface area of 25 to 40 m²/g and a DBP absorption amount of 60 to 95 mL/100 g, and a product D2 × (V2/100) of a DBP absorption amount D2 of the carbon black and a volume fraction V2 [%] of the carbon black in the carcass coating rubber being from 14.0 to 18.0 mL/10000 g.
